# EUROPEAN PATENT APPLICATION

(11) **EP 3 358 392 A1**
(43) Date of publication of application: **08.08.2018**
(21) Application number: 18154865.2
(22) Date of filing: 02.02.2018
(51) Int. Cl.: G02B 27/22, H04N 13/346

(54) **DISPLAY DEVICE**

(30) Priority: 02.02.2017 DE 102017102041
(71) Applicant: Visteon Global Technologies, Inc., Van Buren Township, MI 48111-5711 (US)
(72) Inventor: VAN LAACK, Alexander, 52072 Aachen (DE); CITTADINI, Ruddy, 76872 Minfeld (DE); BELZL, Frederik, 50737 Köln (DE)
(74) Representative: Dummett Copp LLP

(57) **Abstract**

The invention relates to a display device (1, 1', 1") for creating a three-dimensional display of visual images (12, 13). The display device (1, 1', 1") has at least one screen (2, 2', 2"), which is bounded by edges (4, 5), as well as at least one first semi-transparent mirror (6) with an outer edge (6a) and a second semi-transparent mirror (7) with an outer edge (7a). The semi-transparent mirrors (6, 7) are each oriented by the outer edge (6a, 7a) to a surface (3) of the at least one screen (2, 2', 2") and arranged at a particular angle (α) with respect to each other and at a particular angle (β, δ) with respect to the screen (2, 2', 2"). The first semi-transparent mirror (6) is angled in the direction of a viewer (8) and the second semi-transparent mirror (7) is angled away from the viewer (8). The surface (3) of the at least one screen (2, 2', 2") is divided into a first screen region (2'-1, 2"-1) and a second screen region (2'-2, 2"-2). A reflecting surface (9) is arranged at an angle with respect to the surface (3) of the screen (2, 2', 2") at an edge (4) formed on a side of the screen (2, 2', 2") facing away from the viewer (8). The invention furthermore relates to the use of the display device in a vehicle.

## Description

The invention relates to a display device for the creating of images which in combination produce a three-dimensional effect for a viewer. The display device comprises at least one screen and at least two semi-transparent mirrors.

The large number of screens and displays in a vehicle makes it hard to arrange them in an easily observed manner for the driver of the vehicle, yet this is important in order not to impair the concentration of the driver while driving the vehicle. It is therefore desirable to represent the needed information on a single screen.

Furthermore, there is a need for screens which can represent three-dimensional effects. At present, only a few technologies are available for creating 3D effects, such as those based on multilayers with at least two displays or orthogonal arrangements of different components. The known technologies require a very large design space.

DE 103 33 745 A1 describes an indicator device for motor vehicles with at least a first display device giving off projecting light and at least one second illuminated or self-luminous electromechanical display device. The first display device is arranged in a viewing field of a viewer. Between the first display device and the second electromechanical display device arranged at an angle to the first display device there is provided a combination device, which is transparent to the projecting light of the first display device and reflecting to the projecting light of the second electromechanical display device.

DE 10 2008 023 839 A1 discloses an indicator device for a motor vehicle in which several virtual images are superimposed. The indicator device has a first display device for displaying a first luminous controllable information directly viewed by a vehicle driver through a semi-transparent mirror in an at least approximately vertical first display plane and a second display device for displaying a second luminous controllable information in a second display plane which is inclined in its operating position at an angle with respect to the first display plane. The second display device is arranged in front of and beneath the first display device at the vehicle driver side. The second information can be reflected toward the driver by the semi-transparent mirror. The second display device can be moved out from its operating position toward the semi-transparent mirror into a non-operating position.

The problem which the invention proposes to solve is to provide a display device for the representation of images with a three-dimensional effect. The device should have a minimal number of components, especially free-standing components or those which stick out from an installation position. The costs of fabrication and the design space should be minimal. The display device should enable a better interaction between user and vehicle.

The problem is solved by the objects with the features of the independent patent claims. Modifications are indicated in the dependent patent claims.

The problem is solved by a display device according to the invention for the creating of images which in their combination produce a three-dimensional effect for the viewer. The display device serving for the creating of a three-dimensional display from visual images has at least one screen, which is bounded by edges, as well as at least one first semi-transparent mirror and one second semitransparent mirror each with an outer edge.

According to the concept of the invention, the semi-transparent mirrors are each oriented by the outer edge to a surface of the at least one screen and arranged at a particular angle with respect to each other and at a particular angle with respect to the screen. The semi-transparent mirrors preferably lie by the outer edge against the surface of the screen.

The first semi-transparent mirror is angled in the direction of a viewer and the second semi-transparent mirror is angled away from the viewer. The surface of the at least one screen is divided into a first screen region and a second screen region. A reflecting surface is arranged at an angle with respect to the surface of the screen at an edge formed on a side of the screen facing away from the viewer.

The display device is preferably arranged substantially such that the viewer looks along the surface of the screen beyond the screen in the direction of the reflecting surface.

The at least one screen may be designed as a liquid crystal screen, forming the base of the display device. The light rays emitted by the screen are advantageously reflected at the semi-transparent mirrors such that virtual images arise in the space between the semi-transparent mirrors, especially two virtual images. This creates for the viewer a three dimensional representation. The viewer perceives the two two-dimensional images situated one after the other in the viewing direction as a three-dimensional display. The three-dimensional image is created by means of specific graphics making use of the two image planes.

The first screen region and the second screen region are advantageously arranged in a common plane. The screen regions may be configured as a common screen or as two separate screens.

According to a first alternative embodiment of the invention, the first semi-transparent mirror and the second semi-transparent mirror are arranged lying against one another by the outer edges.

The outer edges of the semi-transparent mirrors are preferably arranged forming a line on the surface of the screen, which divides the common screen into the first screen region and the second screen region.

The line formed by the outer edges of the semi-transparent mirrors on the surface of the screen is preferably a straight line which is oriented parallel to one edge of the screen.

According to a second alternative embodiment of the invention, the first semi-transparent mirror and the second semi-transparent mirror are arranged with the outer edges at a distance from each other.

The first screen region and the second screen region are preferably arranged at a distance from each other. A gap is formed between an edge of a first screen region facing away from the viewer and an edge of a second screen region facing the viewer. The screen regions may be designed as separate screens. The gap preferably has a constant width.

According to one modification of the invention, the first semi-transparent mirror is arranged at an edge of the first screen region facing away from the viewer, the second semi-transparent mirror is arranged at an edge of the second screen region facing the viewer, and the reflecting surface is arranged at the edge of the second screen region facing away from the viewer.

Another advantageous embodiment of the invention consists in that the first screen region facing the viewer is coated with a privacy filter. The privacy filter prevents the viewer, especially the driver of the vehicle, from looking directly at the screen and thereby becoming distracted from the road. The driver's attention can remain fixed on the road.

The privacy filter lets through light rays emitted by the first screen region, so that the semi-transparent mirror facing the viewer reflects the image which is created.

The reflecting surface is preferably disposed at a right angle to the surface of the screen.

According to a preferred embodiment of the invention, the first semitransparent mirror and the second semi-transparent mirror are each arranged at the same angle with respect to the surface of the screen. The angles preferably have values in a range of 30° to 70°, preferably in a range of 40° to 55°, especially 45°.

Especially when the first screen region and the second screen region are spaced apart from each other, the first semi-transparent mirror and the second semi-transparent mirror may each be arranged at different angles with respect to the surface of the screen. The semi-transparent mirrors are arranged such with respect to the screen that the virtual images are represented in planes oriented parallel to each other.

The advantageous embodiment of the invention, especially in terms of the space-saving and simple design, enables the use of the display device inside a vehicle, especially for the representation of vehicle parameters, such as the speed, the engine temperature, the oil level and/or fault indications/warning lights, and/or information of vehicle assistance systems, such as an audio system, such as a radio or CD player, distance detectors, a navigation system and/or a lane-holding system. The display device may be integrated in space-saving manner, for example in the dashboard of a vehicle.

The display device according to the invention, in summary, has various other benefits:
- it requires very little design space, so it is ideally suited for installation in the dashboard of a vehicle, in order to present the viewer, especially the vehicle driver, with information in a three-dimensional view,
- the thickness of the screen is negligible, so that efficient screens can be used,
- only one element, especially a semi-transparent mirror, sticks out from the otherwise compact display device and
- the design and arrangement of the second semi-transparent mirror and the reflecting surface for creating the second virtual image allow the virtual display to appear closer to the viewer.

Further details, features and benefits of embodiments of the invention will emerge from the following description, which is given by way of example only, with reference to the enclosed drawings, in which:
Figure 1 is a schematic representation of a first embodiment of a display device with a screen;
Figure 2 is a schematic representation of another embodiment of the display device with two screens;
Figure 3 is a side view of the display device; and
Figure 4 is a perspective representation of the display device.

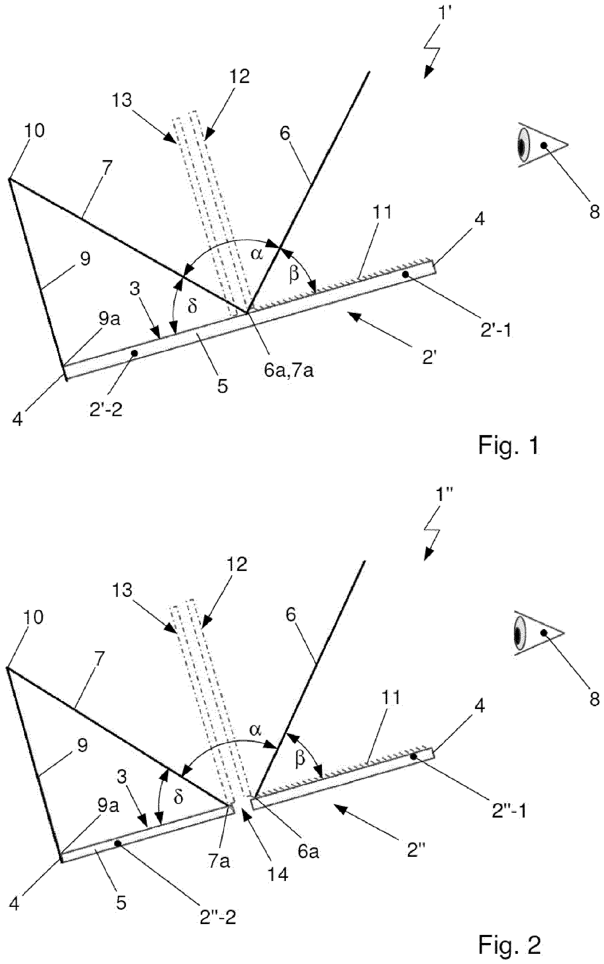

Figure 1 shows a schematic representation of a first display device 1' with a rectangular screen 2'. The screen 2' has a flat surface 3, which is bounded by two opposite and parallel disposed edges 4,5.

A first semi-transparent mirror 6 and a second semi-transparent mirror 7 are arranged above the surface 3 of the screen 2', oriented at an angle α with respect to each other, wherein an outer edge 6a, 7a of each of the mirrors 6, 7 preferably lie against each other, especially so as to make optimal use of the overall surface 3 of the screen 2'. The substantially flat mirrors 6, 7 lie with the contacting outer edges 6a, 7a against the surface 3 of the screen 2', the edges 6a, 7a being oriented parallel to one edge 4 of the screen 2'and dividing the screen 2' into two screen regions 2'-1, 2'-2. The first screen region 2'-1 and the second screen region 2'-2 preferably have roughly the same size. The mirrors 6, 7 are each oriented at a particular angle β, δ with respect to the surface 3 of the screen 2'. The angles α for example have a value of 90° and the angles β, δ values of 45°.

The first semi-transparent mirror 6 is angled in the direction of a viewer 8 and the second semi-transparent mirror 7 is angled away from the viewer 8.

At an outer edge 4 of the screen 2' facing away from a viewer 8 there is arranged a reflecting surface 9, which is preferably angled at a right angle toward the surface 3 of the screen 2'. The angles between the reflecting surface 9 and the surface 3 of the screen 2' may likewise differ from a right angle.

The substantially right-angled reflecting surface 9 lies with one edge 9a against the outer edge 4 of the screen 2' facing away from the viewer 8. The reflecting surface 9 is arranged behind the second semi-transparent mirror 7 in the viewing direction of the viewer.

The second semi-transparent mirror 7 is angled by an angle δ to the surface 3 of the screen 2' such that the second semitransparent mirror 7 lies with an edge formed distally to the edge 7a lying against the surface 3 of the screen 2' against an edge formed distally to the edge 9a of the surface 9 lying against the surface 3 of the screen 2'. The second semi-transparent mirror 7 and the reflecting surface 9 form in this region an outer edge 10 of the display device 1'.

In the region of the display device 1' facing away from the viewer 8, also called the second region, the second semi-transparent mirror 7, the reflecting surface 9 and the surface 3 of the screen 2' form a right triangle in cross section.

In the first screen region 2'-1 facing the viewer 8, the surface 3 of the screen 2' is coated with a privacy filter 11, which prevents the viewer 8 from looking directly at the surface 3 of the screen 2', yet lets the light rays emitted by the screen 2' pass through in the direction of the first semi-transparent mirror 6.

At the first semi-transparent mirror 6 the light rays are reflected such that a first virtual image 12 is produced in a space between the two semi-transparent mirrors 6, 7.

A second virtual image 13 likewise shown in the space formed between the two semi-transparent mirrors 6, 7 is created by the light rays emitted by the second screen region 2'-2, taken by the second semitransparent mirror 7 to the reflecting surface 9 and reflected by the reflecting surface 9. The second virtual image 13 can be projected before or behind the first virtual image 12 in the viewing direction of the viewer 8. The semi-transparent mirrors 6, 7 are each arranged at the angles α, β, δ with respect to the screen 2' so that the virtual images 12, 13 are represented in planes oriented parallel to each other. The three-dimensional image is created by means of specific graphics making use of the two planes of the virtual images 12, 13. The viewer 8 sees two two-dimensional images 12, 13, which appear as a single three-dimensional image.

Figure 2 shows a schematic representation of another display device 1". The display device 1" has a rectangular screen 2", which is divided into a first screen region 2"-1 and a second screen region 2"-2. The mode of functioning of the display device 1" corresponds substantially to that of the display device 1' of Figure 1.

The light rays emitted by the first screen region 2"-1 are reflected by the first semi-transparent mirror 6 and form the first virtual image 12. The light rays emitted by the second screen region 2"-2 are taken by the second semi-transparent mirror 7 to the reflecting surface 9, reflected by the reflecting surface 9, and form the second virtual image 13, which is superimposed on the first virtual image 12.

The first screen region 2"-1, similar to the first region of the surface 3 of the screen 2' of the display device 1' in Figure 1, is coated with a privacy filter 11, which prevents a direct looking by the viewer 8 at the first screen region 2"-1.

The major difference between the display devices 1', 1" of Figures 1 and 2 is the divided configuration of the screen 2" of the display device 1". The two screen regions 2"-1, 2"-2 are arranged at a distance from each other in a common plane. A gap 14 is formed between the screen regions 2"-1, 2"-2. The screen regions 2"-1,2"- 2 preferably have roughly the same size.

The two outer edges 6a, 7a of the first semi-transparent mirror 6 and the second semi-transparent mirror 7, which lie against each other in the display device 1' of Figure 1, are likewise separated from each other by the gap 14. The outer edge 6a of the first semi-transparent mirror 6 lies against the surface of the first screen region 2"-1 and the outer edge 7a of the second semitransparent mirror 7 lies against the surface of the second screen region 2"- 2.

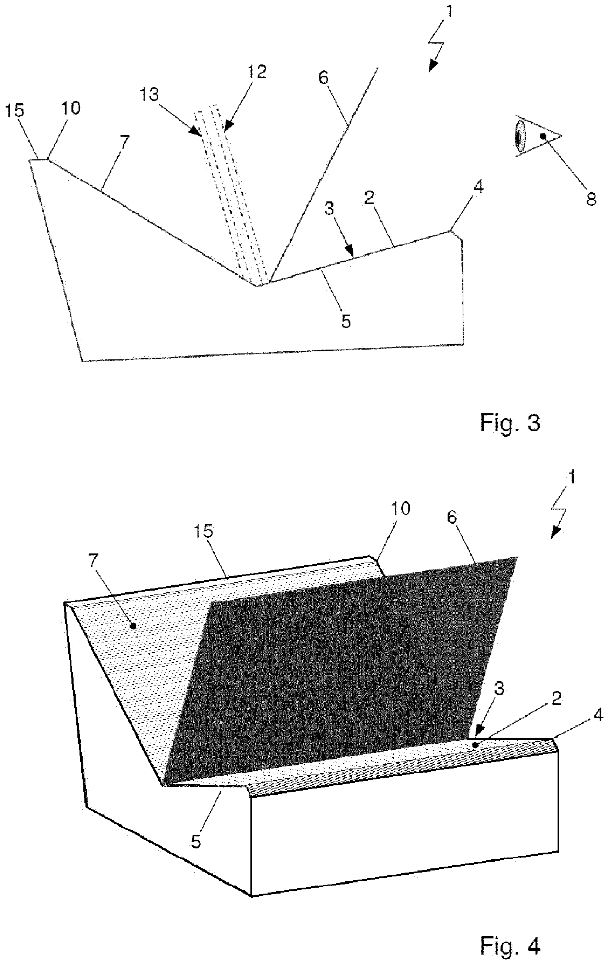

**Figures 3 and 4** show further views of the display device 1, for example, as a cutout of a vehicle dashboard. Figure 3 shows a side view of the display device 1, while Figure 4 shows a perspective representation of the display device 1. The display device 1 for example is integrated in the dashboard of the vehicle.

The display device 1 has a face 15 in the region of the outer edge 10, which is formed by the second semi-transparent mirror 7 and the reflecting surface (not shown). The viewer 8, looking in the viewing direction through the first semi-transparent mirror 6, glances beyond the second semi-transparent mirror 7 and the flat face 15 and perceives the superimposed virtual images 12, 13 producing the three-dimensional effect of the display. When looking along the flat face 15, the viewer 8 is able to see beyond the display device 1. When the display device 1 is used in the dashboard of a vehicle, such a design ensures that the driver of the vehicle, as the viewer 8, can see the roadway beyond the flat face 15 through the three-dimensional representation.

During a use in a vehicle, the display device 1, especially the screen 2, is furthermore connected to a control unit or computer, serving for the providing of the information being represented on the screens 2 and in the virtual images 12, 13. The computer, for example, is connected to the vehicle assistance systems designed in the vehicle and to sensors and detectors serving for the determination of vehicle parameters.

The computer also determines which data and information will be represented within the virtual three-dimensional display.

### List of reference numbers

- 1,1', 1": Display device
- 2, 2', 2": Screen
- 2'-1, 2"-1: First screen region
- 2'-2, 2"-2: Second screen region
- 3: Surface of screen 2
- 4, 5: Edge of screen 2
- 6: First semi-transparent mirror
- 7: Second semi-transparent mirror
- 6a, 7a: Edge of mirrors 6, 7
- 8: Viewer
- 9: Reflecting surface
- 9a: Edge of reflecting surface 9a
- 10: Outer edge of display device 1, 1', 1"
- 11: Privacy filter
- 12: First virtual image
- 13: Second virtual image
- 14: Gap
- 15: Face

- a, β, δ: Angles

## Claims

1. A display device (1, 1', 1") for creating a three-dimensional display of visual images (12, 13), having at least one screen (2, 2', 2"), which is bounded by edges (4, 5), as well as at least one first semi-transparent mirror (6) with an outer edge (6a) and a second semi-transparent mirror (7) with an outer edge (7a), **characterized in that** the semi-transparent mirrors (6, 7) are each oriented by the outer edge (6a, 7a) to a surface (3) of the at least one screen (2, 2', 2") and arranged at a particular angle (α) with respect to each other and at a particular angle (β, δ) with respect to the screen (2, 2', 2"), wherein the first semi-transparent mirror (6) is angled in the direction of a viewer (8) and the second semi-transparent mirror (7) is angled away from the viewer (8), the surface (3) of the at least one screen (2, 2', 2") is divided into a first screen region (2'-1, 2"-1) and a second screen region (2'-2, 2"-2), and a reflecting surface (9) is arranged at an angle with respect to the surface (3) of the screen (2, 2', 2") at an edge (4) formed on a side of the screen (2, 2', 2") facing away from the viewer (8).

2. The display device (1, 1', 1") as claimed in claim 1, **characterized in that** the first screen region (2'-1, 2"-1) and the second screen region (2'- 2, 2"-2) are arranged in a common plane.

3. The display device (1, 1') as claimed in claim 1 or claim 2, **characterized in that** the first semi-transparent mirror (6) and the second semi-transparent mirror (7) are arranged lying against each other by the outer edges (6a, 7a).

4. The display device (1, 1') as claimed in claim 3, **characterized in that** the outer edges (6a, 7a) of the semi-transparent mirrors (6, 7) are arranged forming a line on the surface (3) of the screen (2, 2'), which divides the screen (2, 2') into the first screen region (2'-1) and the second screen region (2'-2).

5. The display device (1, 1') as claimed in claim 4, **characterized in that** the line formed by the outer edges (6a, 7a) of the semi-transparent mirrors (6, 7) on the surface (3) of the screen (2, 2') is a straight line which is oriented parallel to the edge (4) of the screen (2, 2").

6. The display device (1, 1') as claimed in claim 1 or 2, **characterized in that** the first semi-transparent mirror (6) and the second semi-transparent mirror (7) are arranged with the outer edges (6a, 7a) at a distance from each other.

7. The display device (1, 1') as claimed in claim 6, **characterized in that** the first screen region (2"-1) and the second screen region (2"-2) are arranged at a distance from each other, forming a gap (14) between an edge of a first screen region (2"-1) facing away from the viewer (8) and an edge of a second screen region (2"-2) facing the viewer (8).

8. The display device (1, 1') as claimed in claim 6 or claim 7, **characterized in that** the first semi-transparent mirror (6) is arranged at an edge of the first screen region (2"- 1) facing away from the viewer (8), the second semi-transparent mirror (7) is arranged at an edge of the second screen region (2"-2) facing the viewer (8), and the reflecting surface (9) is arranged at the edge of the second screen region (2"-2) facing away from the viewer.

9. The display device (1, 1', 1") as claimed in any one of claims 1 to 7, **characterized in that** the first screen region (2'-1, 2"-1) facing the viewer (8) is coated with a privacy filter (11).

10. The display device (1, 1', 1") as claimed in any preceding claim, **characterized in that** the reflecting surface (9) is arranged at a right angle to the surface (3) of the screen (2, 2', 2").

11. The display device (1, 1', 1") as claimed in any preceding claim, **characterized in that** the first semi-transparent mirror (6) and the second semi-transparent mirror (7) are each arranged at the same angle (β, δ) with respect to the surface (3) of the screen (2, 2', 2").

12. Use of the display device (1, 1', 1") as claimed in any preceding claim in a vehicle.
